# EUROPÄISCHE PATENTSCHRIFT

(11) **EP 1 735 191 B1**
(45) Veröffentlichungstag und Bekanntmachung des Hinweises auf die Patenterteilung: **16.04.2008**
(21) Anmeldenummer: 05716757.9
(22) Anmeldetag: 21.02.2005
(51) Int. Cl.: B60R 21/0132

(54) **MULTIFUNKTIONALER UPFRONTSENSOR**
MULTIFUNCTIONAL UPFRONT SENSOR
DETECTEUR MULTIFONCTIONNEL DE ZONE AVANT

(30) Priorität: 02.04.2004 DE 102004016266
(43) Veröffentlichungstag der Anmeldung: 27.12.2006
(73) Patentinhaber: ROBERT BOSCH GMBH, 70442 Stuttgart (DE)
(72) Erfinder: KUTTENBERGER, Alfred, 71696 Moeglingen (DE); WELLHOEFER, Matthias, 71701 Schwieberdingen (DE)
(86) Internationale Anmeldenummer: PCT/EP2005/050745
(87) Internationale Veröffentlichungsnummer: WO 2005/095161

(56) Entgegenhaltungen:
- DE-A1- 10 212 963
- DE-A1- 19 739 814
- US-A- 5 233 141

## Beschreibung

### Technisches Gebiet

Die Erfindung betrifft ein Sensorelement zur Erfassung der Beschleunigung eines Fahrzeuges gemäß dem Oberbegriff des Anspruchs 1.

DE-A-19739814 zeigt die Merkmale des Oberbegriffs des Anspruchs 1.

### Stand der Technik

Es ist bekannt, Beschleunigungssensoren im Frontbereich eines Fahrzeuges zu positionieren (so genannte Upfrontsensoren), um in einer frühen Phase eines Unfalls Informationen zu dessen Schwere zu liefern. Mit dieser Technik soll erreicht werden, verschiedene Unfallszenarien zu berechnen und dementsprechend verschiedene Rückhaltesysteme, wie zum Beispiel Airbag oder Gurtstraffer, zu aktivieren. Insbesondere soll das Steuergerät des Fahrzeuges kritische Zusammenstöße von solchen Fällen unterscheiden können, die keine Auslösung der Rückhaltemittel erfordern. Das Steuergerät kann zum Beispiel aufgrund der vom Upfrontsensor gelieferten Daten zu einem frühen Zeitpunkt präzise errechnen, ob die Auslösung eines Airbags notwendig ist.

Das Grundprinzip aller Sensoren zur Messung einer Beschleunigung besteht darin, die Wirkung der Beschleunigung auf ein gedämpftes Feder-Masse-System, eine so genannte seismische Masse, zu detektieren. Durch die Beschleunigung verschiebt sich die elastisch an das Gehäuse angekoppelte seismische Masse. Aufgabe der Sensoren ist es, den Grad der beschleunigungsbedingten Auslenkung durch piezo-resistive, kapazitive oder frequenzanaloge Anordnungen auszuwerten.

Bei am Fahrzeug angebrachten Beschleunigungssensoren wird die Verschiebung der seismischen Masse am häufigsten durch Änderungen von Kapazitäten gemessen. Dabei ist die seismische Masse als Elektrode eines oder mehrerer Kondensatoren ausgebildet, wobei diese Anordnung vorzugsweise als Differentialkondensator aufgebaut ist, so dass sich der Plattenabstand des einen Kondensators um den gleichen Betrag verringert, wie sich der des anderen vergrößert. Die Messspannung in der Anordnung ist dabei der Massenverschiebung proportional.

Die Kondensatoren sind bei Upfrontsensoren in Form einer mikromechanischen Kammstruktur ausgebildet, die auf der Oberfläche eines Siliziumwafers aufgebracht ist

Es existiert ein Trend zu einer fortschreitenden Vorverlagerung der Beschleunigungssensoren am Fahrzeuggehäuse. Upfrontsensoren werden bereits an Positionen in der Knautschzone des Fahrzeuges direkt hinter dem Außenblech beziehungsweise an der Stoßstange getestet.

Bekannt sind außerdem verschiedenartige Sensoren zur Messung des Abstandes zwischen dem Fahrzeug und einem fremden Objekt, welche vorwiegend für Komfort- und Sicherheitsfunktionen eingesetzt werden. Das Grundprinzip solcher Sensoren ist das Echolotverfahren.

So sind Ultraschallabstandssensoren bekannt, bei denen von einer Auswerteeinheit ein Pulssignal ausgesendet und die Zeit bis zum Eingang eines Echosignals gemessen wird. Erst danach erfolgt ein neuer Sendeimpuls. Sofern die Schallsignale auf einen Gegenstand treffen, werden diese reflektiert und von einem Schallempfänger der Abstandsmesseinrichtung empfangen. Über eine Rechnereinheit, die die Schallquelle und den Schallempfänger steuert, werden die empfangenen Schallsignale identifiziert, die Laufzeit der Schallsignale berechnet und hieraus eine Entfernung des die Schallsignale reflektierenden Objektes ermittelt. Derartige Abstandsmesseinrichtungen werden beispielsweise in Abstandswamanlagen eingesetzt, die der Einparkhilfe von Kraftfahrzeugen dienen. Bei Einparkhilfen mit Ultraschallsensoren wird typischerweise ein Bereich von circa 30 cm bis 150 cm hinter oder vor dem Fahrzeug überwacht. Wenn ein Hindernis erkannt worden ist, wird der Fahrer durch optische oder akustische Mittel gewarnt.

Für die Abstandsmessung im Fembereich mit Hilfe elektromagnetischer Strahlung ist der Einsatz in Form von Radar und Lidar (Licht des nahen Infrarotbereiches) bekannt. Beim Radar wird der Abstand zu fremden Objekten in einer schmalen Strahlungskeule bis zu 120 m vor dem Fahrzeug ermittelt. Neben dem Abstand kann das Steuergerät auf einfache Weise die Relativgeschwindigkeit des fremden Objekts bezüglich des Fahrzeuges errechnen.

Für eine Verbesserung der Funktionalität der passiven Sicherheit im Fahrzeug ist es erwünscht, die Informationen, welche von den oben genannten Abstands- und Beschleunigungssensoren herstammen, gemeinsam auszuwerten, um intelligent die entsprechenden Rückhaltesysteme, wie Gurtstraffer und Airbags, zu aktivieren, da das Ausmaß der Aktivierung neben dem Gewicht der zu schützenden Fahrzeugpassagiere vor allem von Art und Schwere des Unfalls abhängt. Die Informationen können vom Steuergerät entweder für die Entscheidung über eine Auslösung der Rückhaltemittel kurz nach dem Aufprall (Preset) oder sogar noch davor (Prefire) benutzt werden.

### Darstellung der Erfindung, Aufgabe, Lösung, Vorteile

Aufgabe der vorliegenden Erfindung ist es, ein kompaktes, multifunktionelles Sensorelement bereitzustellen.

Erfindungsgemäß wird diese Aufgabe mittels eines Sensorelements zur Erfassung der Beschleunigung eines Kraftfahrzeuges mit den im Anspruch 1 genannten Merkmalen gelöst.

Dadurch, dass das Sensorelement wenigstens eine Abstandsmesseinnchtung zur Messung des Abstandes eines sich im Messbereich der Abstandsmesseinrichtung befindlichen Objektes umfasst, wird vorteilhaft erreicht, dass die beiden oben genannten Messprinzipien in ein und demselben Bauelement vereint werden, wodurch eine hohe Funktionalität zu geringeren Herstellungskosten entsteht. Dies betrifft niedrigere Materialkosten für Kabel und Gehäuse sowie herabgesetzte Fertigungskosten. Infolgedessen kann es zu hohen Ausstattungsraten selbst bei Volurnensegmenten (Kleinwagen) kommen.

Durch den vorgeschlagenen Sensor können mehrere unterschiedliche Funktionalitäten realisiert werden, welche durch Erweiterung der Logik im Steuergerät progressiv verzahnt werden können. Neben der vorausschauenden Funktionalität, welche in bekannter Weise zum Fußgängerschutz und zur Parkhilfe dienen kann, können Signale, die durch die beiden Messprinzipien an die Auswerteelektronik gesandt werden, dazu benutzt werden, Informationen über die Schwere eines Aufpralls auf ein fremdes Objekt herzuleiten.

Im Falle der Benutzung eines Radars als Abstandsmesseinrichtung werden Abstände von fremden Fahrzeugen im Fernbereich detektiert und erlauben so die Berechnung der verbleibenden Zeit vor dem Aufprall relativ frühzeitig.

Auch bei Benutzung eines Ultraschallsensors als Abstandsmesseinrichtung im Nahbereich kann aufgrund der an die Auswerteelektronik gelieferten Signale die Relativgeschwindigkeit zwischen dem Fahrzeug und einem fremden Objekt berechnet werden, wodurch die Unterscheidung verschiedener Unfallszenarien möglich wird.

Auf der Grundlage der empfangenen Signale kann das Steuergerät frühzeitig parametrisiert werden. Insbesondere kann beim Vergleich der Relativgeschwindigkeit zwischen dem Fahrzeug und dem detektierten fremden Objekt mit der Eigengeschwindigkeit des Fahrzeuges gegebenenfalls ausgeschlossen werden, dass es sich bei dem fremden Objekt um einen Fußgänger handelt

Es kann auch festgestellt werden, ob sich tatsächlich ein Objekt angenähert hat oder ob das Fahrzeug durch reine Schwingungen die gemessene Beschleunigung erfahren hat.

In bevorzugter Ausgestaltung der Erfindung ist vorgesehen, dass das Sensorelement biaxial sensiert. Hierdurch wird erreicht, dass sich die oben genannte Klassifizierung eines Aufpralls auch für einen Seiten- oder Schrägaufprall durchführen lässt. Bei triaxialer Sensierung kann auch eine Beschleunigung in vertikaler Richtung detektiert werden, welche beim Fahren auf unebenem Gelände relevant wird (Offroaderkennung).

Insbesondere ist bevorzugt, dass die Abstandsmesseinrichtung relativ zur seismischen Masse in Vorwärtsrichtung parallel zur Fahrzeuglängsachse angebracht ist. Hierdurch wird erreicht, dass die Abstandsmesseinrichtung nach vorne orientiert werden kann und nicht im Sichtfeld behindert wird.

Weitere bevorzugte Ausgestaltungen der Erfindung ergeben sich aus den in den Unteransprüchen genannten Merkmalen.

### Kurze Beschreibung der Zeichnung

Nachstehend wird die Erfindung in einem Ausfiihrungsbeispiel anhand der beigefügten Zeichnung, die eine schematische Draufsicht auf einen multifunktionellen Upfrontsensor zeigt, näher erläutert.

### Bester Weg zur Ausführung der Erfindung

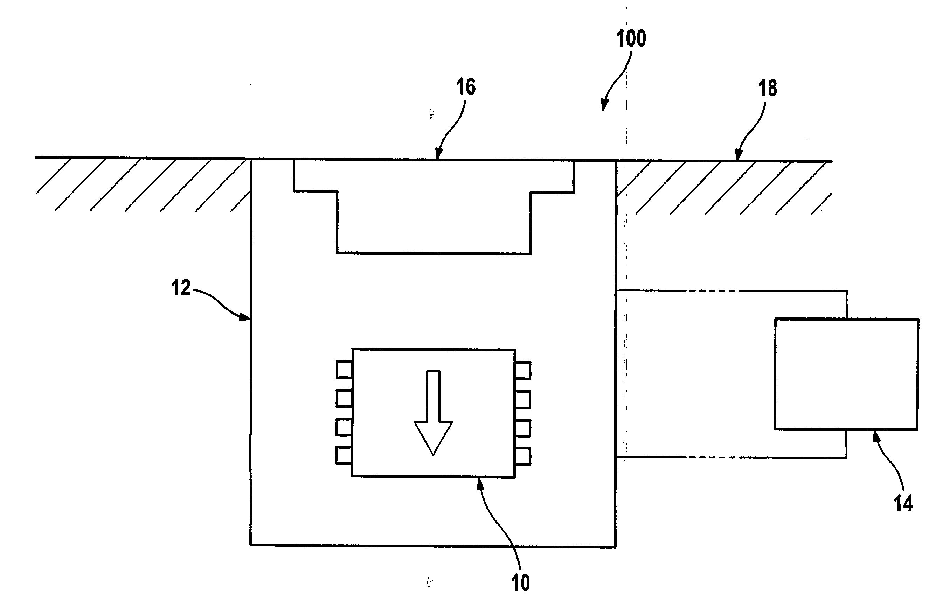

Figur 1 zeigt ein insgesamt mit 100 bezeichnetes Sensorelement. Eine Beschleunigungsmesseinrichtung 10 ist zusammen mit einer Abstandsmesseinrichtung 16 in einem gemeinsamen Sensorgehäuse 12 untergebracht. Dabei ist die Abstandsmesseinrichtung 16 mit Bezug auf die Fahrtrichtung vor der Beschleunigungsmesseinrichtung 10 angebracht. Die Abstandsmesseinrichtung 16 schließt vorzugsweise bündig mit der Frontfläche des Fahrzeuges 18 ab. Signale der Beschleunigungsmesseinrichtung 10 und der Abstandsmesseinrichtung 16 werden - hier nur schematisch dargestellt - an eine Auswerteelektronik 14 geliefert, welche beide Signale logisch interpretiert. Wegen der mit Bezug auf die Fahrkarosserie sehr weit vorne liegenden Positionierung der Beschleunigungsmesseinrichtung 10 muss diese im Fall eines Aufpralls sehr hohe Beschleunigungen tolerieren, was mit einer höheren Einstellung des Messbereiches als bei weiter hinten liegenden Beschleunigungsmesseinrichtungen erreicht werden kann. Ebenso muss das Sensorgehäuse 12 robust genug sein, um die Funktion der Beschleunigungsmesseinrichtung 10 während der ersten 50 ms nach einem Aufprall zu gewährleisten. Ähnliches gilt für die Datenübertragung an das Steuergerät.

Für die Realisierung der beschriebenen Funktionalität des Upfrontsensors ist die Ausstattung eines Fahrzeuges mit ein bis zwei erfindungsgemäßen Sensoren ausreichend.

## Patentansprüche

1. Sensorelement zur Erfassung der Beschleunigung eines Kraftfahrzeuges mit einer innerhalb eines Sensorgehäuses federnd aufgehängten seismischen Masse sowie einer Auswerteelektronik zur Erkennung einer beschleunigungsbedingten Auslenkung der seismischen Masse,
**dadurch gekennzeichnet, dass**
das Sensorelement (100) wenigstens eine Abstandsmesseinrichtung (16) zur Messung des Abstandes eines sich im Messbereich der Abstandsmesseinrichtung befindlichen Objektes umfasst.

2. Sensorelement nach Anspruch 1,
**dadurch gekennzeichnet, dass**
das Sensorelement (100) biaxial sensiert.

3. Sensorelement nach einem der vorhergehenden Ansprüche,
**dadurch gekennzeichnet, dass**
das Sensorelement (100) triaxial sensiert.

4. Sensorelement nach einem der vorhergehenden Ansprüche,
**dadurch gekennzeichnet, dass**
die Abstandsmesseinrichtung (16) relativ zur seismischen Masse in Vorwärtsrichtung parallel zur Fahrzeuglängsachse angebracht ist.

5. Sensorelement nach einem der vorhergehenden Ansprüche,
**dadurch gekennzeichnet, dass**
die Abstandsmesseinrichtung (16) bündig mit einer Frontfläche des Fahrzeuges (18) abschließt.

6. Sensorelement nach einem der vorhergehenden Ansprüche,
**dadurch gekennzeichnet, dass**
die Abstandsmesseinrichtung (16) ein Ultraschallsensor ist.

7. Sensorelement nach einem der vorhergehenden Ansprüche,
**dadurch gekennzeichnet, dass**
die Abstandsmesseinrichtung (16) ein Radar ist.

8. Sensorelement nach einem der vorhergehenden Ansprüche,
**dadurch gekennzeichnet, dass**
die Abstandsmesseinrichtung (16) ein Lidar ist.

## Claims

1. Sensor element for sensing the acceleration of a vehicle having a seismic mass which is suspended in a sprung fashion within a sensor housing, and evaluation electronics for detecting acceleration-induced deflection of the seismic mass, **characterized in that** the sensor element (100) comprises at least one distance-measuring device (16) for measuring the distance from an object located in the measuring range of the distance-measuring device.

2. Sensor element according to Claim 1, **characterized in that** the sensor element (100) senses biaxially.

3. Sensor element according to one of the preceding claims, **characterized in that** the sensor element (100) senses triaxially.

4. Sensor element according to one of the preceding claims, **characterized in that** the distance-measuring device (16) is mounted parallel to the longitudinal axis of the vehicle in the forward direction relative to the seismic mass.

5. Sensor element according to one of the preceding claims, **characterized in that** the distance-measuring device (16) ends flush with a front face of the vehicle (18).

6. Sensor element according to one of the preceding claims, **characterized in that** the distance-measuring device (16) is an ultrasonic sensor.

7. Sensor element according to one of the preceding claims, **characterized in that** the distance-measuring device (16) is a radar.

8. Sensor element according to one of the preceding claims, **characterized in that** the distance-measuring device (16) is a lidar.

## Revendications

1. Elément de capteur pour saisir l'accélération d'un véhicule à l'aide d'une masse sismique suspendue de façon élastique dans un boîtier de capteur ainsi que d'une électronique d'exploitation pour reconnaître une déviation de la masse sismique occasionnée par une accélération,
**caractérisé en ce que**
l'élément de capteur (100) comporte au moins une installation de mesure de distance (13) pour mesurer la distance d'un objet qui se trouve dans la plage de mesure de l'installation de mesure de distance.

2. Elément de capteur selon la revendication 1,
**caractérisé en ce que**
l'élément de capteur (100) a une sensibilité bi-axiale.

3. Elément de capteur selon l'une quelconque des revendications précédentes,
**caractérisé en ce que**
l'élément de capteur (100) a une sensibilité tri-axiale.

4. Elément de capteur selon l'une quelconque des revendications précédentes,
**caractérisé en ce que**
l'installation de mesure de distance (16) est parallèle à l'axe longitudinal du véhicule dans la direction de l'avance par rapport à la masse sismique.

5. Elément de capteur selon l'une quelconque des revendications précédentes,
**caractérisé en ce que**
l'installation de mesure de distance (16) se termine à niveau de la surface frontale du véhicule (18).

6. Elément de capteur selon l'une quelconque des revendications précédentes,
**caractérisé en ce que**
l'installation de mesure de distance (16) est un capteur à ultrasons.

7. Elément de capteur selon l'une quelconque des revendications précédentes,
**caractérisé en ce que**
l'installation de mesure (16) est un radar.

8. Elément de capteur selon l'une quelconque des revendications précédentes,
**caractérisé en ce que**
l'installation de mesure de distance (16) est un lidar.
